# EUROPEAN PATENT SPECIFICATION

(11) **EP 2 577 048 B1**
(45) Date of publication and mention of the grant of the patent: **22.03.2017**
(21) Application number: 11729168.2
(22) Date of filing: 23.05.2011
(51) Int. Cl.: F03B 13/18, F03B 13/20

(54) **NEAR SHORE WEC SYSTEM**
KÜSTENNAHES WELLENENERGIEKONVERTERSYSTEM
SYSTÈME COTIER DE CONVERSION D'ÉNERGIE HOULOMOTRICE

(30) Priority: 17.05.2011 US 201113109743; 04.06.2010 US 351730 P
(43) Date of publication of application: 10.04.2013
(73) Proprietor: Single Buoy Moorings, Inc., 1723 Marly (CH)
(72) Inventor: WILLE, Hein, 06360 Eze (FR); BOUREAU, Sophie, 06000 Nice (FR)
(74) Representative: Nederlandsch Octrooibureau
(86) International application number: PCT/IB2011/001126
(87) International publication number: WO 2011/151693

(56) References cited:
- WO-A1-2004/097212
- WO-A1-2005/080791
- WO-A1-2008/111849
- WO-A1-2008/128307
- WO-A2-2008/138336
- US-A1- 2007 164 641
- US-A1- 2009 313 988
- DETLEF STOLTEN ET AL: "Novel Electric Generator Using Electroactive Polymer Articial Muscle (EPAM)", 18TH WORLD HYDROGEN ENERGY CONFERENCE 2010 - WHEC 2010 PARALLEL SESSIONS BOOK 3: HYDROGEN PRODUCTION TECHNOLOGIES - PART 2,, 1 January 2010 (2010-01-01), pages 22-30, XP007920233, ISBN: 978-3-89336-653-8

## Description

### BACKGROUND OF THE INVENTION

The present invention relates to systems for generating electrical power by extracting energy from waves in shallow water that is usually near shore. The system uses panels or floats that are repeatedly pivoted back and forth to stretch and relax sheets of elastomeric material such as SSM (synthetic stretchable material), to thereby vary the voltage between electrodes lying at opposite faces of the sheet.

There have been recent developments of SSM (synthetic stretchable material) in the form of sheets of elastomeric material such as EAP (electro active polymers) which generates electricity when electrodes at opposite faces of the sheet contain opposite electrostatic charges and the distance between the faces changes, as when it is stretched (or possibly compressed). Such synthetic stretchable material is described in an article "Novel Electric Generator Using Electroactive Polymer Artificial Muscle (EPAM)" by S. Chiba et al. (18th World Hydrogen Energy Conference 2010, Essen), US 2007/164641 A1, US patents 6,768,246 and 7,166,953 by Pelrine; 6,812,624 by Pei; and 7,038,357 by Goldenberg; and US publication 2001/0029401 by Ishido. Applicant provides systems for generating electricity from wave energy, using stretching and/or relaxing or compression of SSM. An example of a wave energy convertor can been found in WO 2008/138336 A2.

### SUMMARY OF THE INVENTION

In accordance with one embodiment of the present invention, systems are provided for producing electricity from wave, or near-surface current energy, using panels that are pivoted back and forth to stretch and relax sheets of elastomeric material. Each system includes a base anchored to a sea bed, a panel pivotally connected to the base to oscillate back and forth in response to current motion acting on faces of the panel, and power extraction means for extracting energy from movements of the panel. The power extraction means includes at least one capacitor cylinder having opposite ends, with one end connected to the base and an opposite end connected to the panel, to stretch and relax (or compress and decompress) sheets of elastomeric material such as sheets of SSM (synthetic stretchable material). Electrodes lying at opposite faces of the sheet carry electric charges, with the voltage between the electrodes varying as the sheet is stretched and relaxed or compressed and relaxed, and with the varying voltage being used to generate electrical power.

In one system, the base has a base support lying near the sea floor and panels extend upward from the base to the sea surface. In another system, the base has a base support lying above the sea surface and panels hang from the support into the sea. In another system, floating bodies are used instead of panels.

The novel features of the invention are set forth with particularity in the appended claims. The invention will be best understood from the following description when read in conjunction with the accompanying drawings.

### BRIEF DESCRIPTION OF THE DRAWINGS

Fig. 1A is an end elevation view of a wave power generating system of the invention wherein opposite ends of a capacitor cylinder move towards and away from each other.
Fig. 1B is a sectional view of a modified wave power generating system of the invention which includes capacitor cylinders beyond both opposite faces of the panel.
Fig. 2 is a right side elevation view of the system of Fig. 1.
Fig. 3 is an end elevation view of a wave power generating system of another embodiment of the invention, wherein opposite ends of a capacitor cylinder pivot about the cylinder axis relative to each other.
Fig. 4 is a right side view of the system of Fig. 3.
Fig. 5 is an end elevation view of another wave power generating system of the invention wherein an upper end of a panel is pivotally mounted on an abovesea base support and extends downward therefrom.
Fig. 6 is a side elevation view of the system of Fig. 5.
Fig. 7 is an end elevation view of a wave power generating system of another embodiment of the invention wherein the base floats and is anchored to the sea floor by mooring lines, and the panel hangs from the base.
Fig. 8 is a side elevation view of the system of Fig. 7.
Fig. 9 is a front elevation view of a system that includes several sub-systems of the type shown in Figs. 7 and 8.
Fig. 10 is a sectional view of a wave power generating system of another embodiment of the invention wherein the base is fixed and extends above the sea surface.
Fig. 11 is a sectional view of another system of the invention wherein the base extends above the sea surface.
Fig. 12 is a front view of a wave generating system of another embodiment of the invention that includes buoys that float on the sea surface.
Fig. 13A is a partial sectional view of a capacitor cylinder such as shown in Fig. 1.
Fig. 13B is a partial sectional view taken on line 13B-13B of Fig. 13A.
Fig. 14 is a partial isometric view of a capacitor cylindrical of another construction that can be used in the cylinder of Fig. 1.
Fig. 14A is a sectional view of the cylinder of Fig. 14A.
Fig. 14B is a view similar to Fig. 14A but with discs of the cylinder compressed more than in Fig. 14A.
Fig. 15 is a sectional view of a capacitor cylinder of another construction that can be used in the cylinder of Fig. 3.
Fig. 15A is a partial sectional view of the cylinder of Fig. 15.
Fig. 16 is a partial isometric view of a capacitor cylinder of another construction that can be used in the cylinder of Fig. 3.
Fig. 17 is a sectional view of a portion of the capacitor cylinder of Fig. 16.

### DESCRIPTION OF THE PREFERRED EMBODIMENTS

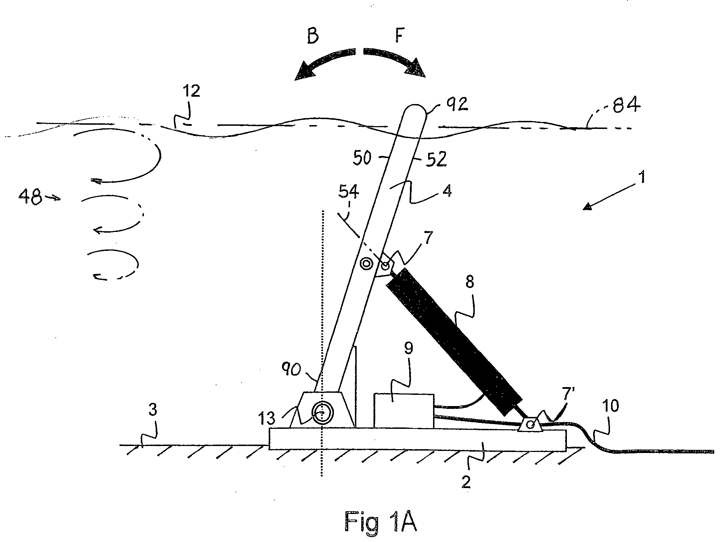

Fig. 1A shows a wave, or water current power generating system 1 of the invention which includes a base 2 lying on the sea floor 3 in a region of shallow waters. The base 2 is pivotally connected at axis 13 to an upstanding panel 4. The panel oscillates backwards and forwards B, F in response to shallow currents acting on panel faces 50, 52. A cylinder 8 lies on a cylinder axis 54 and has opposite ends 7', 7 connected respectively to a support of the base 2 and to the panel 4. Each cylinder end is spaced from the panel pivot axis 13 by at least 5% and preferably at least 10% of the distance between the panel top and bottom ends. The cylinder includes one or more sheets of elastomeric material with electrodes at opposite faces of the sheet. As the panel 4 oscillates under current action, it will either stretch and then relax stretching of the sheet, or compress and relax compression of the sheet. By elongating or compressing the sheet, the cylinder converts energy from shallow current into electricity via a power control unit 9 on the base 2. An electric cable 10 extending from the power control unit 9 delivers electricity to users. The cylinder, or capacitor cylinder holds or is attached to capacitor devices that hold charges under voltages that vary as cylinder locations such as cylinder opposite ends move toward and away from each other or pivot relative to each other.

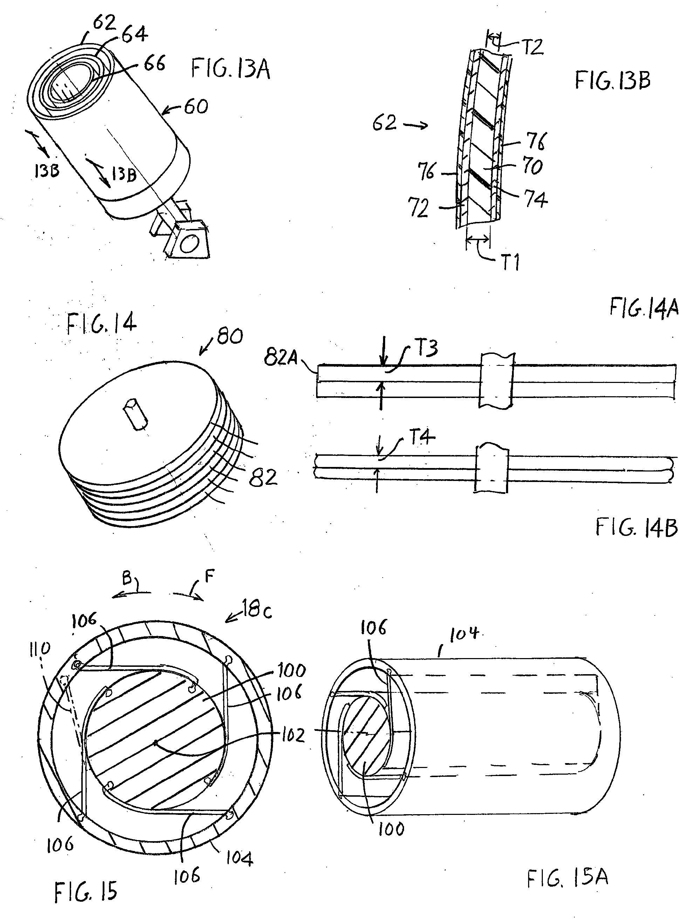

Fig. 13A shows a portion of a cylinder 60 that can be used as the cylinder 8 of Fig. 1A. The cylinder 60 of Fig. 13A contains power extraction means in the form of variable voltage capacitor devices 62, 64, 66 that are each in the form of a tube. Fig. 13B shows that each capacitor device such as 62 includes a sheet 70 of elastomeric material and a pair of electrodes 72, 74 lying against opposite faces of the sheet. The electrodes are preferably stretchable to follow stretching of the elastomeric sheet 70. Fig. 13B also shows elastomeric protective layers 76 on the electrodes. An elastomeric material can be defined as one with a Young's modules of elasticity of no more than 1.0 GPa.

There are electrical charges of different voltages on the electrodes 72, 74. If the sheet 70 is stretched so its thickness decreases from T1 to T2, then the electrodes move closer together and, for the same electric charge, the voltage between the electrodes decreases. When the stretching is relaxed, so the sheet thickness increases, the voltage increases. It is preferred that the sheet 70 always be pre-stretched somewhat, so relaxation of the sheet results in less stretching. Changes in voltage across the sheet 70 can be used to generate electrical power, as is described in detail in US publication 2010/0314871.

Fig. 14 shows a portion of another cylinder 80 that can be used as the cylinder 8 of Fig. 1A. The cylinder 80 includes a stack of capacitor device 82 that each includes a plate, or sheet, of elastomeric material and a pair of electrodes lying against opposite faces of the sheet. The construction can be as shown in Fig. 13B but without the curvature shown. Fig. 14A shows a pair of capacitor devices 82A, each of a thickness T3, before they are fully compressed. Fig. 14B shows the capacitor devices after they are compressed to the thickness T4. The compression to T4 decreases the voltage between the electrodes lying at opposite faces of each sheet of elastomeric material. Compression of the compressible cylinder 80 of Fig. 14 is obtained by opposite ends 7, 7' (Fig. 1a) of the cylinder being moved toward each other when the panel 4 swings forward F.

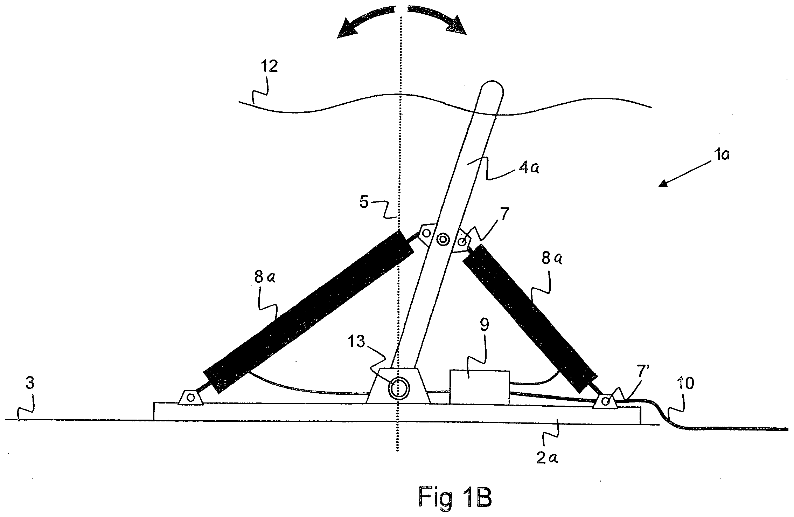

Fig. 1B shows another system 1 a that is similar to the system of Fig. 1 a but that includes a pair of cylinders 8a that each has one end pivotally mounted on a base 2a and an opposite end pivotally connected to the panel 4a. The cylinders 8, which lie on opposite sides of the panel, are preferably pre-stressed in cases where the elastomeric sheet (70, Fig. 13B) of the capacitor device(s) are prestretched and relaxed (to only reduce the stretching). As the panel 4a of Fig. 1B oscillates on opposite side of a vertical line 5, the elastomeric sheet of a cylinder on one side will relax and the sheet of a cylinder on the other side will be stretched even more. The electrical output of each of the cylinders may vary sinusoidally. However, when the voltage outputs of the two cylinders are added the sum voltage varies less because when one voltage output is increasing the other voltage output is decreasing. It is usually easier to utilize a voltage output that varies only moderately, rather than one that varies greatly and at an unpredictable rate. The voltage outputs of the two cylinders vary simultaneously and are 180° out of phase, so their sum varies only moderately and in a repeated and largely predictable manner.

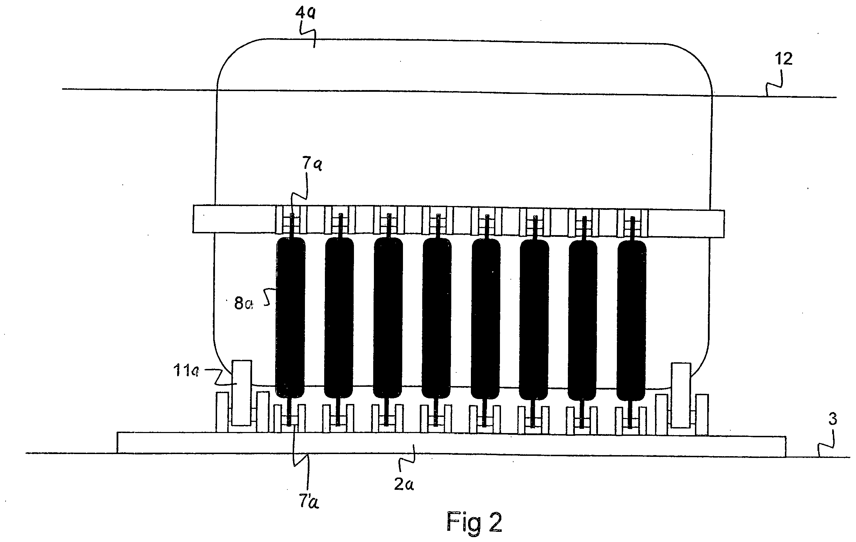

Fig. 2 represents the front view of the wave power generating systems of Fig. 1A and 1B. The system includes several cylinders 8a spaced apart along the length of the base 2a and along the horizontal length of the panel 4a. Each cylinder 8a is attached at one end 7a to the panel 4 and at the other end 7a' to the base 2a that is fixed on the seabed 3. The panel 4a is pivotally attached to the base 2a via pivot joints 11 a. A minority of the panel is above sea level 12.

In shallow waters (under 100 meters depth), water near but below the sea surface moves in ellipses that have a large horizontal component, as indicated at 48 in Fig. 1A. Such wave, or current movement is greatest just below the sea surface and decreases at increasing depth. Such current action is described in PCT WO2004/097212. In order for applicant to obtain maximum panel movement, the panel 4 of Fig. 1A extends to at least the mid tide sea level 84 which is the average sea level. While the bottom 90 of the panel lies near the sea floor, the top 92 of the panel preferably extends slightly above the sea surface 12 level. This allows the panel to be pushed by wave currents 48 lying immediately below the sea surface, even when the panel has tilted from the vertical. This also allows persons on boats to see the tips of the panels to avoid a crash.

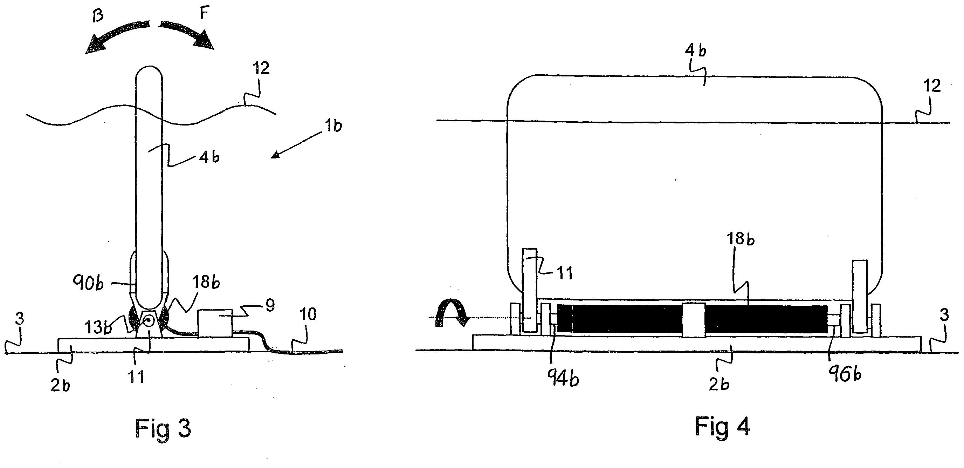

Fig. 3 shows a sectional view of another power generating system of the invention. In this embodiment, as in the ones previously shown, the base 2b lies on the sea floor 3. The base is pivotally attached to the bottom 90b of an upstanding panel 4b about a primarily horizontal axis 13b. The panel is able to oscillate, in use, backwards and forwards about axis 13b in response to shallow current motion acting on faces of the panel (as indicated by arrows B, F). In this embodiment, the cylinder 18b has one end 94b (Fig. 4) fixed to the stationary base 2b and an opposite end 96b that is fixed to the pivoting panel 4b.

As the panel 4b oscillates under shallow current action, the panel applies a torsion force to a capacitor device in the cylinder 18b. The increase and decrease of torsion as the panel pivots is used to convert energy from currents into electricity via a power control unit 9 placed on the base 2b and an electric cable 10 that delivers the electricity to users.

Figs. 15 and 15A show one construction of a cylinder 18c that can be used in place of the cylinder 18b of Fig. 3 to extract electrical energy from rotation of a first end of the cylinder relative to an opposite second end. The cylinder 18c includes a pivoting shaft 100 that lies on the cylinder axis 102 and that is connected to the pivoting panel (4b of Fig. 3), and a stationary tube 104 that is fixed to the base. A plurality of capacitor devices 106 each extends between the pivoting shaft 100 and the tube 104. Each capacitor device 106 includes a sheet of elastomeric material that is stretched when the shaft 100 pivots in direction F while the tube 104 remains fixed to the base and does not pivot. It is possible to mount one or more capacitor devices as shown at 110 to be stretched when the panel and shaft 100 pivot in direction B, and to prestretch all capacitor device. By the use of capacitor devices such as 106, 110 that extend in opposite directions, the devices can be mounted in prestretched positions.

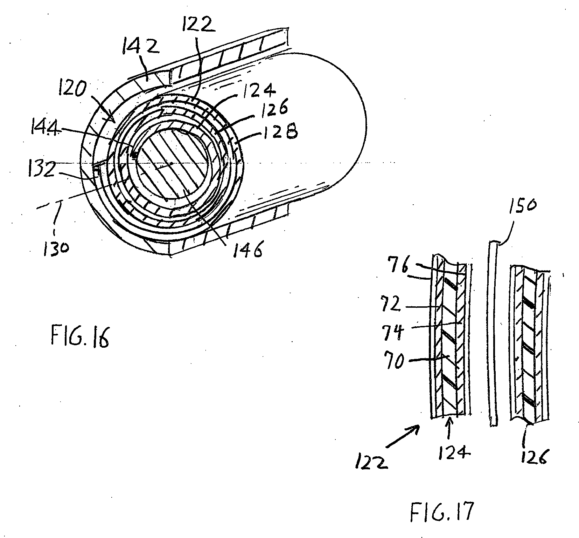

Fig. 16 shows another capacitor device 120 that can be used in place of the cylinder 18b of Fig. 3 to extract electrical energy from relative rotation of opposite ends of the cylinder. The capacitor device 120 includes a multi-layer sheet 122 of elastomeric material that is wrapped in at least one turn, and preferably a plurality of turns 124, 126, 128 in a spiral about an axis 130. The radially outer edge 132 of the multi-layer sheet is fixed to a tube 142 that is fixed to the fixed end of the cylinder. The radially inner edge 144 of the wrap is fixed to a shaft 146 that pivots as a panel pivots.

Fig. 17 shows that the multi-layer sheet 122 has the construction of the capacitor device of Fig. 13B, including an elastomeric sheet 70, electrodes 72, 74, and elastomeric protective layers 76. A sheet 150 of low friction material (e.g. Teflon) lies between adjacent turns such as 124, 126.

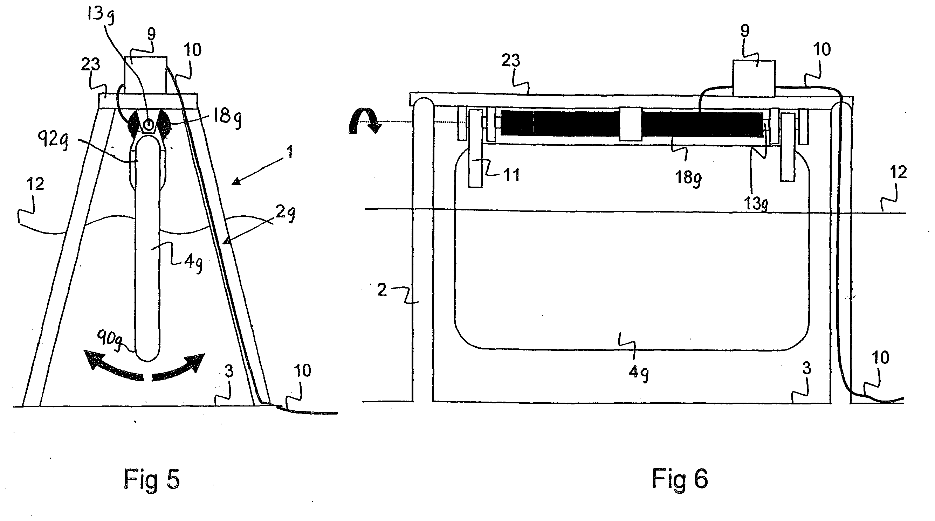

Fig. 5 shows another shallow current power generating system in which the pivoting panel 4g hangs from a support 23 of a base 2g. The upper end 92g of the panel 4g preferably lies above the sea surface. A majority of the panel height lying between the panel ends 90g, 92g, lies under the sea surface 12. A cylinder 18g that extracts electrical energy from panel pivoting, has one cylinder end fixed to the support 23 and an opposite cylinder end fixed to the panel, with both ends lying on the cylinder axis 13g.

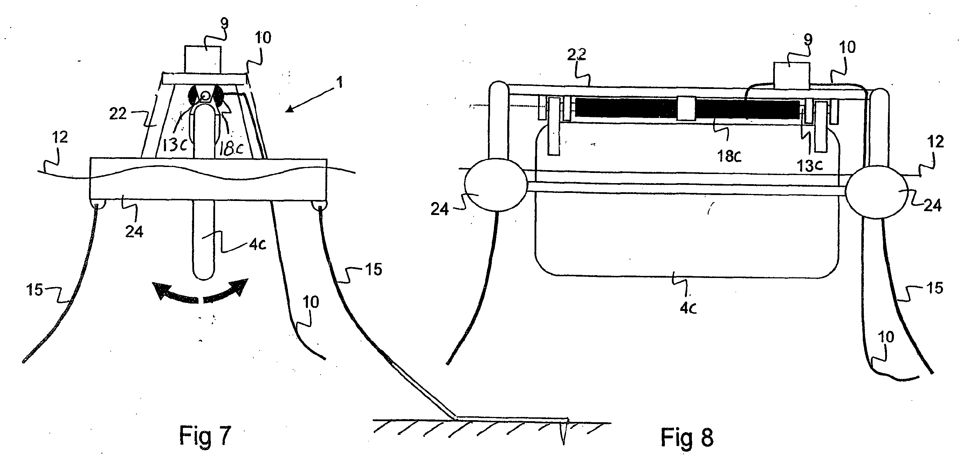

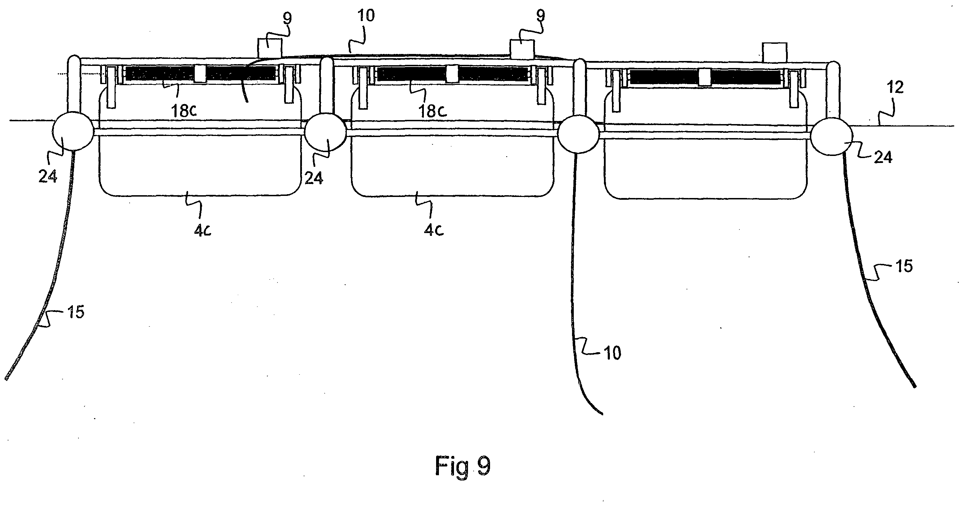

Figs. 7 represents an example not being part of the present invention showing another power generating system of the invention wherein the base 24 is buoyant and is anchored to the sea floor by mooring lines 15 that limit drift of the base from an initial location. The figures show catenary lines, but other line shapes or even rigid posts can be used. The base has a support 22 that supports the top end of a panel 4c about a primarily horizontal axis 13c so the panel hangs therefrom with most of the panel lying underwater level to be exposed to wave action. A cylinder 18c for converting motion to electricity, has an axis 13c lying on the cylinder axis and may be of the types described above for the cylinder of Fig. 3. Fig. 8 and 9 as another examples not being part of the present invention show that the system generally includes a plurality of panels and corresponding cylinders.

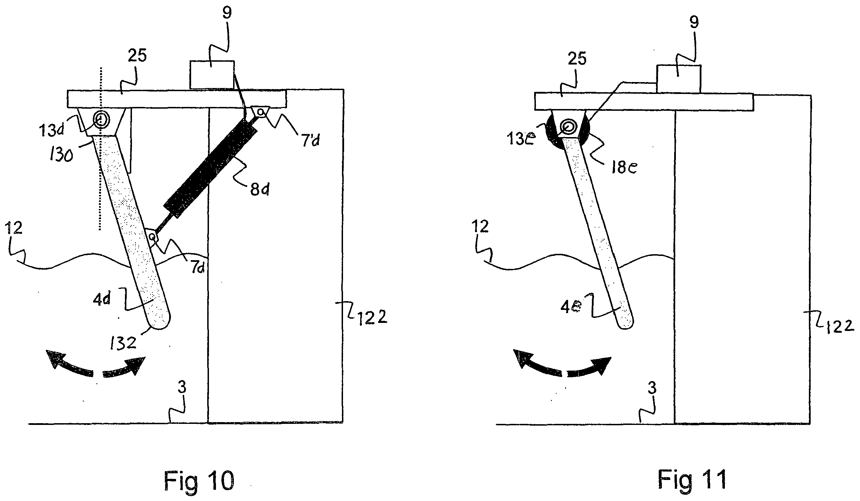

Fig. 10 shows a system wherein the base 122 is fixed to the sea bed 3 and has a base portion 25 lying above the sea surface 12. A panel 4d hangs from the base and has an upper end 130 lying above the sea surface and a lower end 132 lying at least one meter below the sea surface. A cylinder 8d has opposite ends 7d, 7'd with one end 7'd connected to the base at a location spaced from the panel axis 13d, and has an opposite end 7d connected to the panel at a location spaced from the panel axis 13d. Fig. 11 shows a system similar to Fig. 10, except that the cylinder 18e has one end fixed to the base and an opposite end connected to the panel, with one cylinder end pivotable about the axis 13e of the panel 4e.

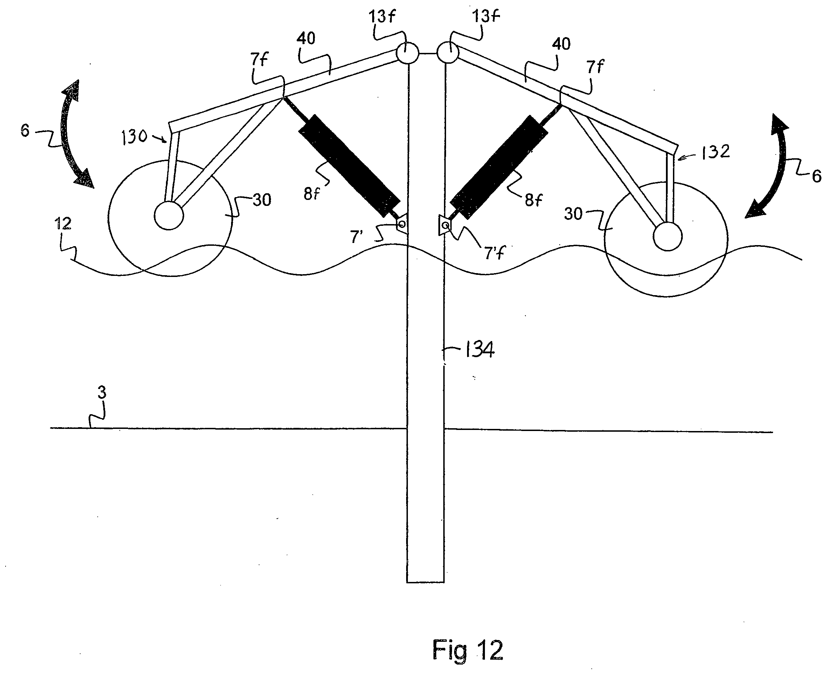

Fig. 12 is a front view of a power generating system of another embodiment of the invention wherein two buoyancy modules 130, 132 at the sea surface are connected to a base 134 that is anchored to the sea to limit drift to zero drift. Each buoyancy module includes a buoyant body 30 that floats on the sea surface 12 and a pivoting frame 40. The frames oscillate up and down about corresponding primarily horizontal axes 13f. Cylinders 8f extend between the pivoting frames 40 and the base 134. The cylinders can be of the types shown in Figs. 13A or 14 wherein opposite ends 7f, 7'f of each cylinder move toward and away from each other. As an alternative, cylinders can be used that each lies on a pivot axis and is of the type shown in Fig. 15.

## Claims

1. Apparatus for converting energy of sea waves into electrical energy, comprising:
a base (2) anchored to the sea floor to limit drift of the base;
a panel (4a) that lies at least partially in said sea and that is pivotally mounted on said base to pivot back and forth between spaced panel positions when moved by the waves; and
a pair of power extraction means lying on opposite sides of said panel;
**characterized in that**:
the power extraction means comprise capacitor devices (8a) that each include a sheet (70) of elastomeric material and a pair of electrodes (72,74) that lie at opposite faces of the sheet, with the sheet of each capacitor device being stretched and with a voltage between the corresponding pair of electrodes, said capacitor devices (8a) each being coupled to said panel (4a) so pivoting of the panel changes the amount of stretching of the sheets of the capacitor devices, and so that when stretching of the sheet of a first of said capacitor devices is increased, stretching of the sheet of the other of said capacitor devices is decreased, and vice versa,
wherein each of said capacitor devices includes a plurality of sheets (62, 64, 66) of elastomeric material in the form of tubes that are nested with each other or a sheet (122) of elastomeric material wrapped in a plurality of turns in a spiral about an axis (130), and wherein said power extraction means comprises means for adding the voltage outputs of the two capacitor devices.

2. Apparatus as claimed in claim 1, wherein said capacitor devices are each coupled to said panel (4a) and to said base (2).

3. The apparatus described in any one of claims 1 to 2, wherein:
each capacitor device (8a) has opposite ends (7, 7') including a first end (7') mounted on said base at a location that is spaced from a first panel axis (13) by a distance of at least 5% of the span between panel top and bottom ends, and including a second end (7) that is connected to said panel at a location spaced from said first panel axis by at least said distance, so said capacitor ends move together and apart as said panel oscillates.

## Patentansprüche

1. Vorrichtung zum Umwandeln von Energie von Meereswellen in elektrische Energie umfassend:
eine Basis (2), die auf dem Meeresgrund verankert ist, um ein Verrutschen der Basis zu begrenzen;
ein Paneel (4a), das zumindest teilweise im Meer liegt und schwenkbar an der Basis montiert ist, um zwischen beabstandeten Paneelpositionen hin und her zu schwenken, wenn es durch die Wellen bewegt wird; und
ein Paar Leistungsentnahmemittel, die auf gegenüberliegenden Seiten des Paneels liegen; **dadurch gekennzeichnet, dass**:
die Leistungsentnahmemittel Kondensatorvorrichtungen (8a) aufweisen, die jeweils eine Lage (70) Elastomermaterial und ein Paar Elektroden (72, 74), die auf einander gegenüberliegenden Seiten der Lage liegen, umfassen, wobei die Lage von jeder Kondensatorvorrichtung gedehnt ist und eine Spannung zwischen den entsprechenden Elektrodenpaaren besteht, wobei die Kondensatorvorrichtungen (8a) jeweils an das Paneel (4a) gekoppelt sind, so dass ein Schwenken des Paneels (4a) die Dehnung der Lagen der Kondensatorvorrichtungen verändert und so dass, wenn die Lage einer ersten der Kondensatorvorrichtungen stärker gedehnt wird, die Dehnung der Lage der anderen der Kondensatorvorrichtungen abnimmt und umgekehrt,
wobei jede der Kondensatorvorrichtungen mehrere Lagen (62, 64, 66) Elastomermaterial in Form von Röhren aufweist, die ineinander verschachtelt sind, oder eine Lage (122) aus Elastomermaterial, die in mehreren Wicklungen in einer Spirale um eine Achse (130) gewickelt ist, und wobei das Leistungsentnahmemittel ein Mittel zum Hinzufügen der Spannungsausgaben der zwei Kondensatorvorrichtungen umfasst.

2. Vorrichtung nach Anspruch 1, wobei die Kondensatorvorrichtungen jeweils an das Paneel (4a) und die Basis (2) gekoppelt sind.

3. Vorrichtung nach einem der Ansprüche 1 bis 2, wobei:
jede Kondensatorvorrichtung (8a) gegenüberliegende Enden (7, 7') aufweist, die ein erstes Ende (7') umfassen, das an der Basis an einem Ort montiert ist, der von einer ersten Paneelachse (13) um einen Abstand von mindestens 5% der Strecke zwischen dem oberen und unteren Ende des Paneels beabstandet ist, und ein zweites Ende (7) aufweist, das mit dem Paneel an einem Ort verbunden ist, der von der ersten Paneelachse um mindestens diesen Abstand beabstandet ist, so dass die Kondensatorenden aufeinander zu und voneinander weg bewegt werden, wenn das Paneel oszilliert.

## Revendications

1. Appareil pour convertir l'énergie de vagues de la mer en énergie électrique, comprenant :
une base (2) ancrée sur le fond marin pour limiter une élévation de la base ;
un panneau (4a) qui est situé au moins partiellement dans ladite mer et qui est monté de manière pivotante sur ladite base pour pivoter en va-et-vient entre des positions de panneau espacées lorsqu'il est déplacé par les vagues ; et
une paire de moyens d'extraction de puissance située sur des côtés opposés dudit panneau ;
**caractérisé en ce que :**
les moyens d'extraction de puissance comprennent des dispositifs à condensateur (8a) qui comprennent chacun une feuille (70) de matériau élastomère et une paire d'électrodes (72, 74) qui sont situées au niveau de faces opposées de la feuille, la feuille de chaque dispositif à condensateur étant étirée et ayant une tension entre les paires d'électrodes correspondantes, lesdits dispositifs à condensateur (8a) étant reliés chacun audit panneau (4a) de sorte qu'un pivotement du panneau change la quantité d'étirement des feuilles des dispositifs à condensateur, et de sorte que lorsque l'étirement de la feuille d'un premier desdits dispositifs à condensateur est accru, l'étirement de la feuille de l'autre desdits dispositifs à condensateur est diminué et vice versa,
dans lequel chacun desdits dispositifs à condensateur comprend une pluralité de feuilles (62, 64, 66) de matériau élastomère ayant la forme de tubes qui sont emboîtés les uns dans les autres ou une feuille (122) de matériau élastomère enroulée sous forme d'une pluralité de spires d'une spirale autour d'un axe (130), et dans lequel lesdits moyens d'extraction de puissance comprennent des moyens pour ajouter les sorties de tension des deux dispositifs à condensateur.

2. Appareil selon la revendication 1, dans lequel lesdits dispositifs à condensateur sont chacun reliés audit panneau (4a) et à ladite base (2).

3. Appareil selon l'une quelconque des revendications 1 à 2, dans lequel :
chaque dispositif à condensateur (8a) a des extrémités opposées (7, 7') comprenant une première extrémité (7') montée sur ladite base à un emplacement qui est écarté d'un premier axe de panneau (13) d'une distance d'au moins 5 % de l'étendue entre les extrémités supérieure et inférieure du panneau, et comprenant une seconde extrémité (7) qui est reliée audit panneau à un emplacement écarté dudit premier axe de panneau d'au moins ladite dite distance, de sorte que lesdites extrémités de condensateur se déplacent ensemble et séparément lorsque ledit panneau oscille.
